Europäisches Patentamt

European Patent Office

Office européen des brevets

(11) Veröffentlichungsnummer: **0 260 754 B1**

# (12) EUROPÄISCHE PATENTSCHRIFT

(45) Veröffentlichungstag der Patentschrift: **26.02.92**

(21) Anmeldenummer: **87201730.6**

(22) Anmeldetag: **10.09.87**

(51) Int. Cl.⁵: **G02B 6/40**, G02B 6/06

(54) **Anordnung zur Verbindung einer Vielzahl von Lichtwellenleitern (LWL) eines optischen Kabels.**

(30) Priorität: **12.09.86 DE 3631033**

(43) Veröffentlichungstag der Anmeldung:
**23.03.88 Patentblatt 88/12**

(45) Bekanntmachung des Hinweises auf die
Patenterteilung:
**26.02.92 Patentblatt 92/09**

(84) Benannte Vertragsstaaten:
**DE FR GB IT**

(56) Entgegenhaltungen:
**DE-A- 2 048 439**
**DE-A- 2 522 740**
**DE-A- 2 523 496**
**DE-U- 7 521 031**
**GB-A- 924 774**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB IT**

(72) Erfinder: **Wieczorek, Eckbert, Dr.**
**Bruchstrasse 68**
**W-5024 Pulheim 3(DE)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Anordnung zur Verbindung einer Vielzahl von ankommenden Lichtwellenleitern (LWL) eines optischen Kabels mit weiterführenden LWL, mit einer ebenen Koppelplatte, die die Enden der ankommenden LWL in rasterförmig angeordneten Durchgangsbohrungen jeweils zentriert aufnimmt, wobei die Abstände der weiterführenden LWL untereinander an den Verbindungsstellen wesentlich größer als die Abstände der LWL im optischen Kabel sind.

Bei einer nach der DE-AS 25 22 740 bekannten Anordnung dieser Art sind die Endflächen der ankommenden LWL direkt in einer Anschlußebene der Koppelplatte angeordnet und an die Endflächen der abgehenden, in einer gleichartigen Vorrichtung angeordneten LWL nach Art einer Steckverbindung anlegbar.

Die Endflächen der LWL müssen in einem genau vorgesehenen Rasterabstand angeordnet sein. Insbesondere für Ortsnetze werden passive Rangiereinheiten benötigt, welche zu Kabelverzweigungen ein teilnehmerbezogenes Rangieren ermöglichen. Dabei müssen zahlreiche individuelle Koppelverbindungen auf einfache Weise herstellbar und variierbar sein.

Die Rasterabstände der ankommenden LWL müssen relativ groß sein, wenn es möglich sein soll, jederzeit jedes Ende der ankommenden LWL mit einem beliebigen der abgehenden LWL zu koppeln. Bei einer hohen Anzahl von in der Koppelplatte gehaltenen LWL ergeben sich zwangsläufig erhebliche Abmessungen für die Verbindungsfläche der Koppelplatte.

Ein erforderlicher Schleifvorgang, durch welchen die Endflächen der LWL bündig mit der Verbindungsfläche der Koppelplatte geschliffen werden, erfordert eine hohe Sorgfalt und aufwendige Schleifeinrichtungen. Die bekannte Anordnung ist nicht für die Verwendung vor Ort z.B. in einem Kabelschacht geeignet.

Der Erfindung liegt die Aufgabe zugrunde, eine Anordnung der eingangs genannten Art derart zu gestalten, daß sie auch für die Montage vor Ort geeignet ist.

Die Lösung gelingt dadurch, daß der Koppelplatte ein Aufweitungsblock nachgeschaltet ist, welcher mindestens eine der Anzahl der ankommenden LWL entsprechende Anzahl von Lichtleitbahnen enthält, die sich von einer Eingangsseite zu einer Ausgangsseite erstrecken, und daß die Enden der Lichtleitbahnen eingangsseitig in einem Rasterschema angeordnet sind, das dem Rasterschema der Koppelplatte entspricht, und ausgangsseitig an einer Anschlußfläche in einem Rasterschema mit wesentlich erweiterter Rastergröße angeordnet sind, wobei die Eingangsseite des Aufweitungsblocks an der Koppelplatte anliegt und Steckverbindungsmittel an der Ausgangsseite des Aufweitungsblocks angeordnet sind.

Vor Ort brauchen nur die Verbindungen der ankommenden LWL mit der Koppelplatte hergestellt zu werden. Da diese sehr viel kleinere Flächenabmessungen aufweist als die Anschlußfläche des Aufweitungsblocks, ist eine Schleifbearbeitung mittels handlicher Werkzeuge auch vor Ort ohne weiteres möglich. Die weiteren benötigten Bauelemente zur Komplettierung der Verbindungsvorrichtung können vorgefertigt sein und müssen vor Ort lediglich noch montiert werden. Die Vorfertigung ist in der Fabrik problemlos möglich, dort können auch größere Flächen mit der erforderlichen Präzision geschliffen werden.

Die Lichtleitbahnen des Aufweitungsblocks können als Abschnitte von handelsüblichen LWL ausgebildet sein, die vorteilhaft in separate Profilkörper mit sich erweiterndem Querschnitt eingelegt sein können. Aus den einzelnen Profilkörpern wird schließlich der Aufweitungsblock zusammengefügt.

Die Lichtleitbahnen können aber auch als planare Streifenwellenleitungsstrukturen ausgebildet sein, die in an sich bekannter Weise herstellbar sind. Nur andeutungsweise seien diesbezüglich genannt: Ionenaustausch von Gläsern, Eindiffundieren von Titan in $LiNbO_3$, laserinduzierte CVD-Strukturen in Glas oder Wellenleiter in Polymersubstraten wie z.B. PMMA.

Mit den Endflächen der Lichtleitbahnen können insbesondere Steckverbindungen mit abgehenden LWL, einzeln oder gruppenweise, hergestellt werden. Die Rasterabstände der Endflächen der Lichtleitbahnen müssen an der vergrößerten Koppelfläche des Aufweitungsblocks so groß sein, daß Rangiervorgänge wie das Abkoppeln oder Ankoppeln einzelner Steckverbindungen ohne Beeinträchtigung benachbarter Verbindungen möglich sind.

Vorteilhaft ist der Anschlußfläche des Aufweitungsblocks ein Anschlußblock zugeordnet, welcher eine Vielzahl von den Lichtleitbahnen des Aufweitungsblocks zugeordneten Steckerhalterungen trägt.

Die den Endflächen jeder einzelnen Lichtleitbahn zugeordneten Steckerhalterungen sind dann ebenfalls in angepaßter Rasterstruktur in einem monolithischen Block festgelegt.

Damit ein verlustarmer Durchgang der optischen Strahlung in die abgehenden LWL möglich ist, müssen die Rasterstrukturen der einzelnen aufeinanderfolgenden Elemente der erfindungsgemäßen Anordnung mit einer solchen Präzision hergestellt werden, daß Abweichungen von höchstens 5% des Lichtfleckdurchmessers von der Ideallage eingehalten werden.

Der schädliche Einfluß geometrischer Toleranz-Abweichungen kann durch Abbildungsoptiken verkleinert werden, die zwischen den zu koppelnden Lichtleitelementen angeordnet sind. Das kann mit einer für sämtliche LWL oder für Gruppen von LWL gemeinsamen Abbildungsoptik geschehen. Vorteilhaft können die Abbildungsoptiken aus einer zwischengelegten monolithischen Linsenplatte bestehen.

Die Koppelplatte kann aus aufeinandergelegten balkenförmigen Elementen bestehen, welche jeweils Führungsrinnen für eine Mehrzahl von parallel nebeneinander in einer Ebene liegenden LWL aufweisen.

Eine andere vorteilhafte Ausführungsart ist dadurch gekennzeichnet, daß die Koppelplatte einen Stapel von wabenförmigen, nebeneinander geschichteten Führungshülsen je LWL enthält (vergl. Acta Electronica, Vol. 14, 1971, S. 201 bis 224).

Besonders kleinflächige Koppelplatten ergeben sich dadurch, daß die Koppelplatte aus einem Rahmen besteht, welcher in dichter Packung nebeneinander geschichtete LWL umfaßt.

Die einzelnen Bauelemente sind vorteilhaft durch Führungs- und Zentriereinrichtungen zueinander ausgerichtet. Ein bevorzugtes Ausführungsbeispiel ist dadurch gekennzeichnet, daß Führungs- und Zentriereinrichtungen an einem gemeinsamen Gehäuse für die Bauelemente angeordnet sind.

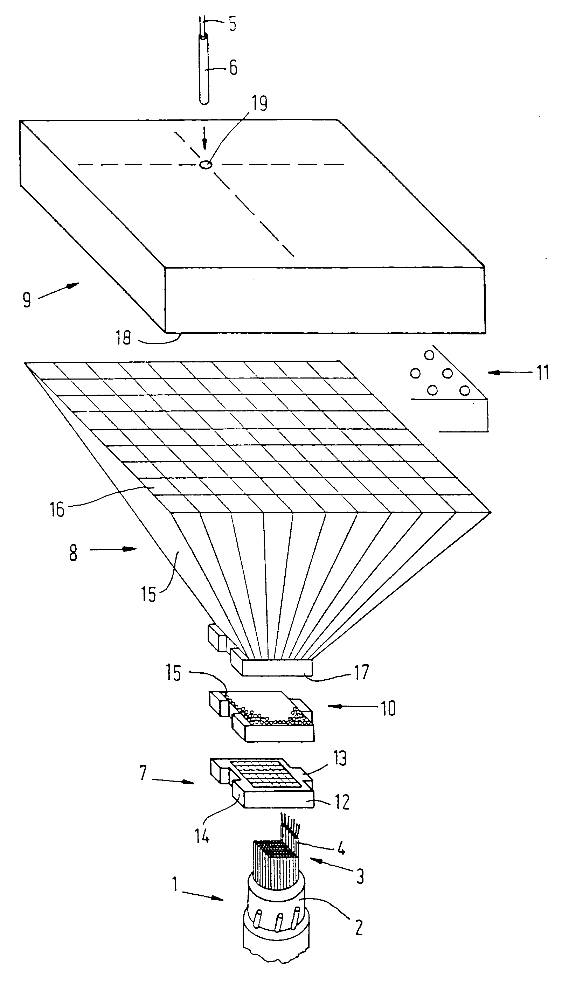

Die Erfindung wird anhand der Beschreibung eines in der Zeichnung dargestellten vorteilhaften Ausführungsbeispiels näher erläutert.

Die Figur zeigt schematisch als Explosionszeichnung die wesentlichen Bauelemente einer erfindungsgemäßen Verbindungsvorrichtung.

Das ankommende optische Kabel 1 enthält innerhalb der Umhüllung 2 eine Mehrzahl von optischen Bandleitungen 3, die jeweils aus einer Anzahl nebeneinander geklebter LWL 4 bestehen. Jede einzelne dieser LWL 4 muß lichtleitend und dämpfungsarm mit einem abgehenden LWL 5 gekoppelt werden können, von denen einer in der Figur oben dargestellt ist. Die abgehenden LWL 5 enden zweckmäßig in einer Steckerhülse 6.

Die erfindungsgemäße Vorrichtung, welche in beliebiger Kombination die lichtleitende Kopplung eines abgehenden LWL 5 mit einem der ankommenden LWL 4 ermöglicht, besteht aus einer Koppelplatte 7, einem Aufweitungsblock 8 und einem Anschlußblock 9, sowie gegebenenfalls einer kleinen Linsenplatte 10 zwischen der Koppelplatte 7 und dem Aufweitungsblock 8 und/oder einer größerflächigen Linsenplatte 11 zwischen dem Aufweitungsblock 8 und dem Anschlußblock 9.

Die Bauelemente 7, 8, 9, 10 und 11 sind in zueinander genau ausgerichteter Lage aneinandergefügt. Sie weisen deshalb Führungs- und Zentriereinrichtungen auf, die einen genauen wechselseitigen Formschluß benachbarter Bauelemente ermöglichen oder formschlüssig in korrespondierende Führungs- und Zentriereinrichtungen eines gemeinsamen, die Bauelemente umschließenden nicht dargestellten Gehäuses eingreifen.

Die Koppelplatte 7 besteht aus jeder Bandleitung 3 zugeordneten und aus Glas hergestellten Balkenelementen, in welche parallele Führungsrinnen für die einzelnen LWL 4 beispielsweise eingeätzt sind. Eine vergleichbare konstruktive Lösung ist in der DE-OS 24 49 359 beschrieben. Die mit einer Präzision von besser als 0,5 um hergestellten Balkenelemente sind durch Klebeschichten oder durch Adhäsion miteinander verbunden und in einem Rahmen 12 gehaltert, welcher Führungs- und Zentrieransätze 13 und 14 aufweist. Gleichartige Führungs- und Zentrieransätze sind auch für die Linsenplatte 10 und den Aufweitungsblock 8 angedeutet.

Die Koppelplatte 7 kann jedoch auch als monolithische Einheit hergestellt werden, wie es in Applied Optics, Vol. 21, 1982, S. 3456 bis 3460 beschrieben ist. Dort ist auch erläutert, wie monolithische Linsenplatten 10 oder 11 hergestellt werden können, welche in genauer Rasterstruktur eine Vielzahl von jedem einzelnen LWL 4 zugeordneten Mikrolinsen 15 enthalten.

Der Aufweitungsblock 8 besteht aus aneinandergefügten Schichtelementen 15, welche jeweils nebeneinander eine Mehrzahl von einer Bandleitung 3 zugeordneten Lichtleitbahnen 16 aufweisen, die eingangsseitig an der Fläche 17 in einer der Koppelplatte gleichen engen Rasterstruktur beginnen und sich strahlenförmig aufweitend ausgangsseitig in einer wesentlich vergrößerten Rasterstruktur enden.

Die Lichtleitbahnen können als kurze Abschnitte einer LWL oder als planare optische Strukturen ausgebildet sein.

Der Anschlußblock 9 weist eine Vielzahl von Steckaufnahmeöffnungen 19 auf, in welche die Steckerhülsen 6 der LWL 5 in genauer Zentrierung einführbar sind. Die Rasterstruktur der Steckaufnahmeöffnungen 19 entspricht derjenigen der Lichtleitbahnen an der Ausgangsseite des Aufweitungsblocks 8.

Vorteilhaft enden die Endflächen der LWL 5 bündig mit der Stirnfläche 18 des Anschlußblocks 9. Die Lagesicherung der einzelnen Zentrierhülsen 6 im Anschlußblock 9 kann durch Verriegelungsmechanismen wie Bajonett-, Klemm- oder Schnappverbindungen bewirkt werden. Diesbezüglich sind zahlreiche geeignete Lösungen bekannt. Eine vergleichbare Lösung ist beispielsweise in der DE-OS 28 32 839 beschrieben.

Das nicht dargestellte Gehäuse kann Einrichtungen umfassen, welche eine Zugentlastung und/oder einen Knickschutz für das optische Kabel 1 ermöglichen.

Die erfindungsgemäße Verbindungsanordnung ist gleichermaßen für Einmoden- und Mehrmoden-LWL geeignet. Sie kann für Kabelverzweigungen, Hauptverteiler und auch für Endverzweigungen eingesetzt werden.

**Patentansprüche**

1. Anordnung zur Verbindung einer Vielzahl von ankommenden Lichtwellenleitern (LWL 4) eines optischen Kabels mit weiterführenden LWL (5), mit einer ebenen Koppelplatte (7), die die Enden der ankommenden LWL in rasterförmig angeordneten Durchgangsbohrungen jeweils zentriert aufnimmt, wobei die Abstände der weiterführenden LWL (5) untereinander an den Verbindungsstellen wesentlich größer als die Abstände der LWL (4) im optischen Kabel sind, dadurch gekennzeichnet, daß der Koppelplatte (7) ein Aufweitungsblock (8) nachgeschaltet ist, welcher mindestens eine der Anzahl der ankommenden LWL (4) entsprechende Anzahl von Lichtleitbahnen (16) enthält, die sich von einer Eingangsseite zu einer Ausgangsseite erstrecken, und daß die Enden der Lichtleitbahnen (16) eingangsseitig in einem Rasterschema angeordnet sind, das dem Rasterschema der Koppelplatte entspricht, und ausgangsseitig an einer Anschlußfläche in einem Rasterschema mit wesentlich erweiterter Rastergröße angeordnet sind, wobei die Eingangsseite des Aufweitungsblocks an der Koppelplatte anliegt und Steckverbindungsmittel (9,19) an der Ausgangsseite des Aufweitungsblocks (8) angeordnet sind.

2. Anordnung nach Anspruch 1, dadurch gekennzeichnet, daß die Lichtleitbahnen (16) als Abschnitte von LWL ausgebildet sind.

3. Anordnung nach Anspruch 1, dadurch gekennzeichnet, daß die Lichtleitbahnen (16) als planare Streifenwellenleiterstrukturen ausgebildet sind.

4. Anordnung nach einem der Ansprüche 1 bis 3, dadurch gekennzeichnet, daß die Lichtleitbahnen (16) in separaten Profilkörpern angeordnet sind, welche zum Aufweitungsblock (8) zusammengefügt sind.

5. Anordnung nach einem der Ansprüche 1 bis 4,dadurch gekennzeichnet, daß Abbildungsoptiken (10,11) zwischen Koppelplatte (7) und Aufweitungsblock (8) sowie nach dem Aufweitungsblock (8) angeordnet sind.

6. Anordnung nach Anspruch 5, dadurch gekennzeichnet, daß die Abbildungsoptiken (10,11) jeweils aus einer monolithischen Linsenplatte bestehen.

7. Anordnung nach einem der Ansprüche 1 bis 6, dadurch gekennzeichnet, daß die Koppelplatte (7) aus aufeinandergelegten balkenförmigen Elementen besteht, welche jeweils Führungsrinnen für eine Mehrzahl von parallel nebeneinander in einer Ebene liegenden LWL (4) aufweisen.

8. Anordnung nach einem der Ansprüche 1 bis 6, dadurch gekennzeichnet, daß die Koppelplatte (7) einen Stapel von wabenförmigen, nebeneinander geschichteten Führungshülsen je LWL (4) enthält.

9. Anordnung nach einem der Ansprüche 1 bis 6, dadurch gekennzeichnet, daß die Koppelplatte (7) aus einem Rahmen (12) besteht, welcher in dichter Packung nebeneinander geschichtete LWL (4) umfaßt.

10. Anordnung nach einem der Ansprüche 1 bis 9, dadurch gekennzeichnet, daß der Anschlußfläche des Aufweitungsblocks (8) ein Anschlußblock (9) zugeordnet ist, welcher eine Vielzahl von den Lichtleitbahnen (16) des Aufweitungsblocks (8) zugeordneten Steckerhalterungen (19) trägt.

11. Anordnung nach einem der Ansprüche 1 bis 10, dadurch gekennzeichnet, daß die einzelnen Bauelemente (7,8,9,10,11) durch Führungs- und Zentriereinrichtungen (13,14) zueinander ausgerichtet sind.

12. Anordnung nach Anspruch 11, dadurch gekennzeichnet, daß entsprechende Führungs- und Zentriereinrichtungen an einem gemeinsamen Gehäuse für die Elemente (7,8,9,10,11) angeordnet sind.

**Claims**

1. An arrangement for connecting a plurality of incoming optical waveguides (OWG 4) of an optical cable to subsequent optical waveguides (5) by means of a flat coupling plate (7) which receives the ends of the incoming optical waveguides in a centered position in throughholes which are arranged according to a grid pattern , the interspace between the subsequent optical waveguides (5) being considerably larger at the junctions than the interspace between the optical waveguides (4) in the optical cable, characterized in that the coupling plate (7) is followed by a widening block (8) which comprises at least a number of light-guiding paths (16) corresponding to the number of incoming optical waveguides (4), which light-guiding paths extend from an input side to an output side, and in that the ends of the light-guiding paths (16) are arranged according to a grid pattern on the input side, which grid pattern corresponds to that of the coupling plate, and said ends being arranged on the output side at a connection surface having a grid pattern with considerably enlarged grid dimensions, the input side of the widening block abutting against the coupling plate and connector receptacles (9, 19) being arranged on the output side of the widening block (8).

2. An arrangement as claimed in Claim 1, characterized in that the light-guiding paths (16) are constructed as sections of optical waveguides.

3. An arrangement as claimed in Claim 1, characterized in that the light-guiding paths (16) are constructed as planar stripline waveguide structures.

4. An arrangement as claimed in any one of Claims 1 to 3, characterized in that the light-guiding paths (16) are arranged in separate profiled bodies, which are joined to form the widening block (8).

5. An arrangement as claimed in any one of Claims 1 to 4, characterized in that optical imaging systems (10, 11) are arranged between the coupling plate (7) and the widening block (8) as well as after the widening block (8).

6. An arrangement as claimed in Claim 5, characterized in that each of the optical imaging systems (10, 11) comprises a monolithic lens plate.

7. An arrangement as claimed in any one of Claims 1 to 6, characterized in that the coupling plate (7) consists of superimposed beam-shaped elements which all have guide channels for a plurality of optical waveguides (4) arranged parallel beside each other in one plane.

8. An arrangement as claimed in any one of Claims 1 to 6, characterized in that the coupling plate (7) comprises a stack of honeycomb-shaped juxtaposed and superimposed guide sleeves per optical waveguide (4).

9. An arrangement as claimed in any one of Claims 1 to 6, characterized in that the coupling plate (7) consists of a frame (12) which encloses juxtaposed and superimposed optical waveguides (4) arranged with high packing density.

10. An arrangement as claimed in any one of Claims 1 to 9, characterized in that the connection surface of the widening block (8) is provided with a connection block (9) which carries a plurality of connector receptacles (19) associated with the light-guiding paths (16) of the widening block (8).

11. An arrangement as claimed in any one of Claims 1 to 10, characterized in that the individual components (7, 8, 9, 10, 11) are aligned with respect to each other by guiding and centering devices (13, 14).

12. An arrangement as claimed in Claim 11, characterized in that corresponding guiding and centering devices are arranged at a common housing for the elements (7, 8, 9, 10, 11).

**Revendications**

1. Dispositif pour relier une pluralité de guides de lumière émetteurs (4) d'un câble optique à des guides de lumière récepteurs (5) par l'intermédiaire d'une plaque de couplage plane (7) qui reçoit les extrémités des guides de lumière émetteurs à l'état centré dans des alésages de traversée disposées sous la forme d'un treillis, l'écartement des guides de lumière récepteurs, aux endroits de liaison, étant sensiblement supérieur à celui des guides de lumière du câble optique, caractérisé en ce que derrière la plaque de couplage (7) est intercalé un bloc élargisseur (8) comportant au moins un nombre de voies de guidage de lumière (16) correspondant à celui des guides de lumière émetteurs, voies de guidage qui s'étendent à partir d'un côté d'entrée vers un autre côté de sortie et en ce que, du côté d'entrée, les extrémités des voies de guidage de lumière (16) sont disposées de façon à présenter une configuration de treillis correspondant à celle de la plaque de couplage et en ce que, du côté de sortie, à l'endroit d'une surface de raccordement, lesdites extrémités sont disposées de façon à présenter une configuration de treillis à mailles sensiblement élargies, le côté d'entrée du bloc élargisseur étant appuyé sur la plaque de couplage et des moyens connecteurs (9, 19) étant prévus du côté de sortie du bloc élargisseur.

2. Dispositif selon la revendication 1, caractérisé en ce que les voies de guidage de lumière (16) sont réalisées sous la forme de tronçons de guides de lumière.

3. Dispositif selon la revendication 1, caractérisé en ce que les voies de guidage de lumière (16) sont réalisées sous la forme de structures optiques planes.

4. Dispositif selon l'une quelconque des revendications 1 à 3, caractérisé en ce que les voies de guidage de lumière (16) sont disposées dans des corps profilés individuels et assemblées de façon à constituer le bloc élargisseur (8).

5. Dispositif selon l'une quelconque des revendications 1 à 4, caractérisé en ce que des optiques d'imagerie (10,11) sont disposées aussi bien entre la plaque de couplage (7) et le bloc élargisseur (8) que derrière le bloc élargisseur (8).

6. Dispositif selon la revendication 5, caractérisé en ce que chacune des optiques d'imagerie (10,11) est constituée d'une plaque monolithique à lentilles.

7. Dispositif selon l'une quelconque des revendications 1 à 6, caractérisé en ce que la plaque de couplage (7) est constituée d'éléments en forme de barre superposés présentant chacun des rainures de guidage pour une pluralité de guides de lumière (4) disposées parallèlement entre elles, dans un même plan.

8. Dispositif selon l'une quelconque des revendications 1 à 6, caractérisé en ce que la plaque de couplage (7) comporte, pour chaque guide de lumière (4), un empilement de douilles alvéolées juxtaposées et superposées.

9. Dispositif selon l'une quelconque des revendications 1 à 6, caractérisé en ce que la plaque de couplage (7) est constituée d'un cadre (12) entourant un ensemble de guides de lumière juxtaposés et superposés avec une grande compacité.

10. Dispositif selon l'une quelconque des revendications 1 à 9, caractérisé en ce qu'à la surface de raccordement du bloc élargisseur (8) est associé un bloc de raccordement (9) portant une pluralité de supports de connecteur (19) associés aux voies de guidage de lumière (16) du bloc élargisseur (8).

11. Dispositif selon l'une quelconque des revendications 1 à 10, caractérisé en ce que les constituants individuels (7,8,9,10,11) sont alignés entre eux au moyen de dispositifs de guidage et de centrage.

12. Dispositif selon la revendication 11, caractérisé en ce qu'un boîtier commun présente des dispositifs de guidage et de centrage correspondants pour les constituants (7,8,9,10,11).